## Europäisches Patentamt
## European Patent Office
## Office européen des brevets

(19)

(11) Veröffentlichungsnummer: **0 136 493**
A2

(12) # EUROPÄISCHE PATENTANMELDUNG

(21) Anmeldenummer: 84109657.1

(22) Anmeldetag: 14.08.84

(51) Int. Cl.⁴: **B 60 B 35/08**

(30) Priorität: 03.10.83 DE 3335885

(43) Veröffentlichungstag der Anmeldung:
10.04.85 Patentblatt 85/15

(84) Benannte Vertragsstaaten:
AT BE CH DE FR GB IT LI LU NL SE

(71) Anmelder: Otto Sauer Achsenfabrik Keilberg
Hauptstrasse 26
D-8751 Bessenbach-Keilberg(DE)

(72) Erfinder: Henrich, Gert, Dipl.-Ing.c/o KEIL &
SCHAAFHAUSEN
Patentanwälte Ammelburgstrasse 34
D-6000 Frankfurt am Main 1(DE)

(74) Vertreter: Keil, Rainer A., Dipl.-Phys. Dr. et al,
Patentanwälte KEIL & SCHAAFHAUSEN
Ammelburgstrasse 34
D-6000 Frankfurt am Main 1(DE)

(54) **Fahrzeugradachse.**

(57) Die Erfindung bezieht sich auf eine Fahrzeugradachse
mit einem an seinen Enden Achszapfen für die Aufnahme
von als Kegelrollenlager ausgebildeten Radlagern gleichen
Lagerdurchmessers aufweisenden Achsrohr. Zur Verbesserung einer solchen Fahrzeugradachse ist nach der Erfindung
im wesentlichen vorgesehen, daß das Achsrohr über seine
gesamte Länge einschließlich der Achszapfen gleichen bzw.
im wesentlichen gleichen Durchmesser hat.

EP 0 136 493 A2

./...

FIG.1

S 19 P 59 EP

Firma
Otto Sauer
Achsenfabrik Keilberg

8751 Bessenbach-Keilberg

Fahrzeugradachse

Beschreibung:

Die Erfindung bezieht sich auf eine Fahrzeugradachse mit einem an seinen Enden Achszapfen für die Aufnahme von als Kegelrollenlager ausbildeten Radlagern gleichen Lagerdurchmessers aufweisenden Achsrohr.

Bei bisher bekannten Fahrzeugradachsen dieser Art ist der Durchmesser der Achszapfen gegenüber dem mittleren Achskörper des Achsrohres erheblich verjüngt. Die Lagerdurchmesser unterscheiden sich dadurch erheblich von demjenigen des mittleren Achskörpers. Hierdurch wollte man u.a. den Vorteil nutzen, daß kompakte Rollenlager kleineren Durchmessers erheblich billiger waren als leichtere Lager größeren Durchmessers. Es ist auch schon bekannt, bei Vierkant-Achskörpern gleiche Lagerdurchmesser an den Achszapfen vorzusehen.

Aufgabe der vorliegenden Erfindung ist es, die bekannte Fahrzeugradachse zu verbessern, d.h. insbesondere zu vereinfachen, und zu verbilligen.

Diese Aufgabe wird mit der Erfindung dadurch gelöst, daß das Achsrohr über seine gesamte Länge einschließlich der Achszapfen gleichen bzw. im wesentlichen gleichen Durchmesser hat. Abweichend von der bisher immer für erforderlich gehaltenen Verjüngung der Achszapfen weist das Achsrohr nach der Erfindung keine Achszapfen mit einer wesentlichen Verringerung des Durchmessers mehr auf. Dadurch ergeben sich nicht nur gleiche Lagerdurchmesser. Die Lagerdurchmesser haben nunmehr auch einen wesentlich größeren Innendurchmesser als bisher, weil die Achszapfen gleichen bzw. im wesentlichen gleichen Außendurchmesser wie der mittlere Achskörper des Achsrohres haben. Die Radlager können daher in engerem Abstand zueinander angeordnet werden als bisher. Infolge des kleineren Abstands der Radlager zueinander kann die Radnabe wesentlich kürzer gehalten werden. Das Widerstandsmoment der Achszapfen ist durch den vergrößerten Durchmesser erheblich angestiegen. Mit der Erfindung wird also nicht nur das Achsrohr erheblich kostengünstiger, sondern auch die Radnabe leichter und billiger. Der Achskörper kann mit seinen Achszapfen vorzugsweise einteilig ausgebildet sein und praktisch aus einem abgesägten Rohr von über seine Länge gleichem Durchmesser, gleicher Materialstärke und Materialqualität bestehen. Die Qualität des Achszapfens war bisher wesentlich höher als die des mittleren Achskörpers des Achsrohrs, weil die Durchmesser am Achszapfen kleiner waren.

Vorzugsweise ist jedoch der Innendurchmesser des Achsrohres einschließlich der Achszapfen über dessen gesamte Länge gleich. Bei einer Weiterbildung des Erfindungsgedankens kann das Achsrohr im Bereich des Achszapfens außen eine Andrehung zur Bildung einer Anlageschulter für eines der Radlager aufweisen. Dadurch wird die Montage der Radlager erleichtert und ihre axiale Anordnung gesichert.

Aufgrund des auf die gleiche Größe des Durchmessers des mittleren Achskörpers vergrößerten Durchmessers der Achszapfen ist es möglich, in Weiterbildung des Erfindungsgedankens einen für ein Antiblockiersystem bestimmten Sensor nunmehr axial innerhalb des Achszapfens raumsparend anzuordnen, der mit einem an der Radkappe angeordneten Impulsgeber zusammenwirkt. Der Sensor kann aber auch radial vor den Achszapfen liegen, so daß der Impulsgeber radial abgetastet wird und die Abtastung vom axialen Lagerspiel unabhängig ist.

Bei einer einfachen konstruktiven Lösung kann dabei der Impulsgeber als mit der Radkappe, z.B. durch Punktschweißung, verbundenes Lochblech ausgebildet sein. Der Radius des Kreises, auf welchem die Löcher des Lochbleches liegen, kann, da der Achszapfen nunmehr einen vergrößerten Durchmesser hat, hinreichend groß sein, um dem Impulsgeber die erforderliche Genauigkeit durch eine hinreichende Zahl von Löchern zu geben. Die Löcher liegen entweder axial oder radial vor dem Sensor.

Wegen der möglichen Verkürzung der Radnabe ist auch die Anbringung eines Kilometerzählers möglich, ohne daß dieser über die üblicherweise verwendete Reifenkontur hinausragt; er liegt damit gegen Stöße und Beschädigung geschützt und bietet keine Verletzungsgefahr mehr.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt:

Fig. 1    im Schnitt ausschnittsweise eine die Erfindung
aufweisende Fahrzeugradachse im Bereich der oberen
Hälfte eines Achszapfens, und

Fig. 2    eine Darstellung einer anderen Ausführungsform im
Bereich der Radkappe.

Die Fahrzeugradachse hat ein Achsrohr 4 mit der geometrischen
Achse A. Das Achsrohr 4 hat über seine gesamte Länge, also
auch im Bereich seiner äußeren Achszapfen 2 gleichen Innendurchmesser. Das Achsrohr 4 hat ferner über seine gesamte
Länge im wesentlichen gleiche Wandstärke. Bei dem dargestellten Ausführungsbeispiel ist lediglich im Bereich des Achszapfens 2 eine äußere Andrehung 5 geringer Tiefe vorgesehen,
um eine Anschlagschulter 6 für die Anlage des axial innen
liegenden Teils des als Doppelrollenkegellager ausgebildeten
Radlagers 3 zu schaffen. Zwischen Anschlagschulter 6 und Radlager 3 ist im dargestellten Fall eine Stoßscheibe 14 montiert. Das Achsrohr 4 kann ein abgesägtes Rohr sein.

Aufgrund des gegenüber herkömmlichen Lösungen auf den Durchmesser des mittleren Achskörpers der Rohrachse 4 vergrößerten
Durchmessers des Achszapfens 2 und des damit größeren Innendurchmessers der Radlager 3 können die beiden Teile des Radlagers 3 in engerem Abstand zueinander angeordnet werden.
Infolgedessen kann die Radnabe 11, die von den Radlagern 3
aufgenommen wird, kürzer, leichter und billiger sein.

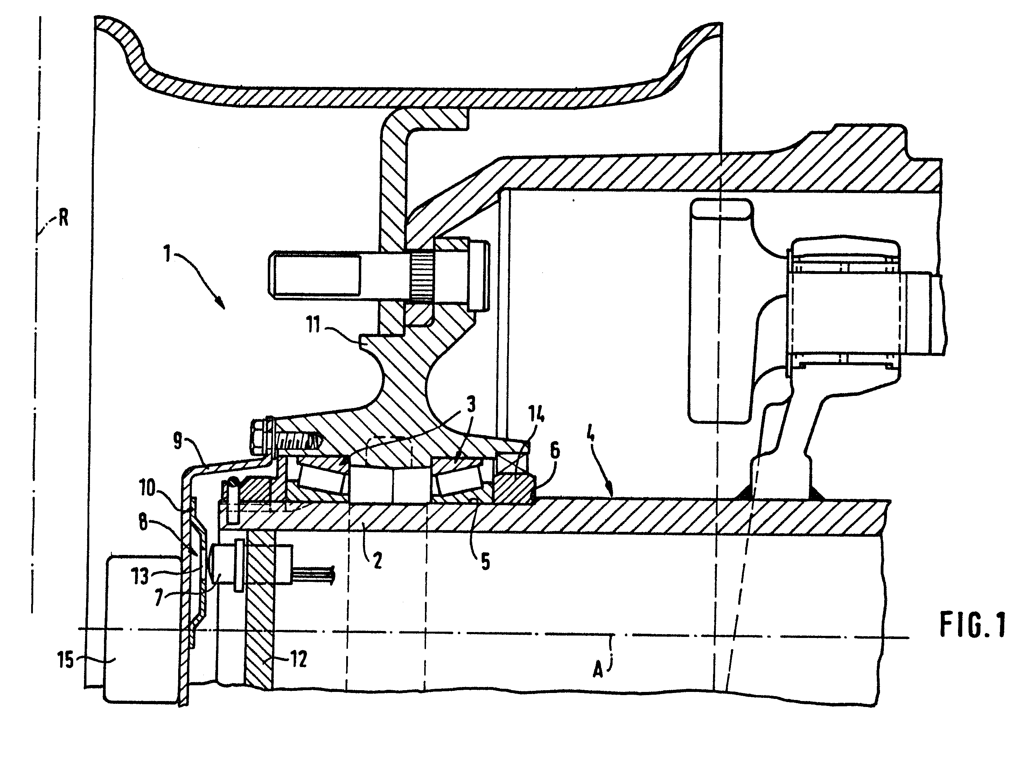

Gemäß Fig. 1 ist im stirnseitigen Ende des Achszapfens 2 eine
Zentrierscheibe 12 vorgesehen, welche einen Sensors 7 für die
Betätigung eines Antiblockiersystems trägt. Der Sensor 7
arbeitet mit einem Impulsgeber 8 zusammen, der im dargestellten Fall als Lochblech 10 ausgebildet ist, welches Lochblech 10 mit der Radkappe 9 punktverschweißt ist. Die die Impulsgebung bewirkenden Löcher 13 des Lochbleches 10 können sich aufgrund des vergrößerten Durchmessers des Achszapfens 2 jetzt stirnseitig vor dem Sensor 7 auf einem Kreis befinden und an diesem vorbei bewegen, dessen Radius und damit Umfang hinreichend groß ist, um eine genügend große Zahl von Löchern 13 für die erforderliche Genauigkeit der Impulsgebung unterbringen zu können.

Axial vor der Radkappe 9 sitzt ein Kilometerzähler 15, der aufgrund der Kürze der Radnabe 11 nicht über die Reifenkontur R hinausragt und dadurch geschützt liegt.

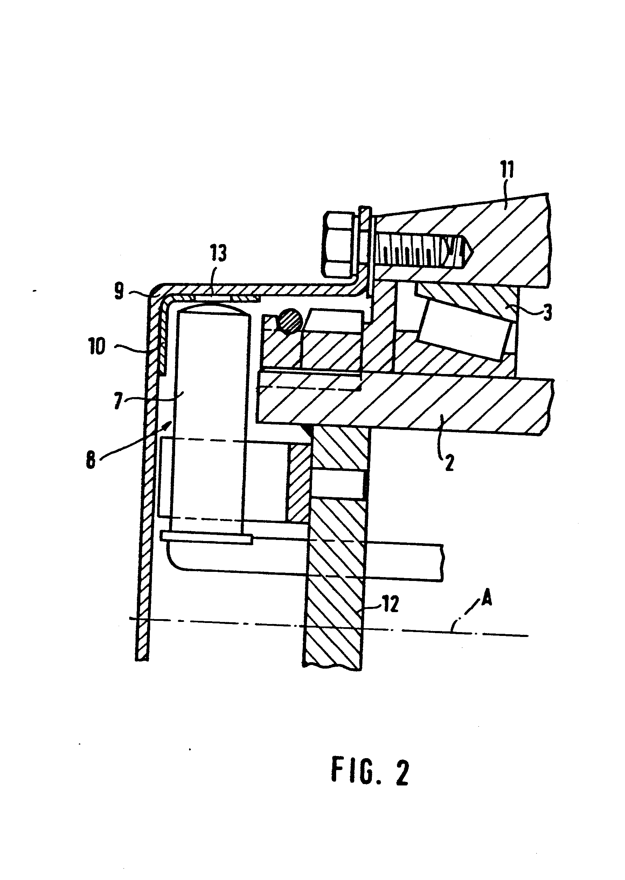

Gemäß Fig. 2 sitzt der Sensor 7 axial gerichtet vor dem Achszapfen 2 und tastet impulsgebende Löcher 13 ab, die radial vor dem Sensor 7 bei Drehung des Rades vorbeigeführt werden.

Die erfindungsgemäße Lösung bringt damit trotz ihrer einfachen technischen Realisierbarkeit in vielen Richtungen erhebliche Verbesserungen der Fahrzeugradachse 1. Nicht nur das Achsrohr 4 mit Achszapfen 2 ist einfacher und billiger, sondern auch die Radnabe 11; auch die Unterbringungsmöglichkeit für die Sensor-Impulsgeber-Anordnung 7, 10 für ein Antiblockiersystem und den Kilometerzähler 15 ist wesentlich verbessert.

Bezugszeichenliste:

1      Fahrzeugradachse
2      Achszapfen
3      Radlager
4      Achsrohr
5      Andrehung
6      Anlageschulter
7      Sensor
8      Impulsgeber
9      Radkappe
10     Lochblech
11     Radnabe
12     Zentrierscheibe
13     Löcher
14     Stoßscheibe
15     Kilometerzähler
A      Achse
R      Reifenkontur

Firma
Otto Sauer
Achsenfabrik Keilberg

8751 Bessenbach-Keilberg

Fahrzeugradachse

Ansprüche:

1. Fahrzeugradachse mit einem an seinen Enden Achszapfen für die Aufnahme von als Kegelrollenlager ausgebildeten Radlagern gleichen Lagerdurchmessers aufweisenden Achsrohr, dadurch gekennzeichnet, daß das Achsrohr (4) über seine gesamte Länge einschließlich der Achszapfen (2) gleichen bzw. im wesentlichen gleichen Durchmesser hat.

2. Fahrzeugradachse nach Anspruch 1, dadurch gekennzeichnet, daß das Achsrohr (4) mit den Achszapfen (2) aus einem Teil besteht.

3. Fahrzeugradachse nach Anspruch 1 oder 2, dadurch gekennzeichnet, daß der Innendurchmesser des Achsrohres (4) einschließlich der Achszapfen (2) über dessen gesamte Länge gleich ist.

4. Fahrzeugradachse nach einem der Ansprüche 1 bis 3, dadurch gekennzeichnet, daß das Achsrohr (4) im Bereich des Achszapfens (2) eine Andrehung (5) für die Bildung einer Anlageschulter (6) für eines der Radlager (3) hat.

5. Fahrzeugradachse nach einem der Ansprüche 1 bis 4, mit einem Sensor und einem Impulsgeber für ein Antiblockiersystem, dadurch gekennzeichnet, daß der Sensor (7) axial innerhalb des Achszapfens (2) oder radial vor dem Achszapfen (2) und der mit ihm zusammenwirkende Impulsgeber (8) an der Radkappe (9) angeordnet ist.

6. Fahrzeugradachse nach Anspruch 5, dadurch gekennzeichnet, daß der Impulsgeber (8) als mit der Radkappe (9), z.B. durch Punktschweißung, verbundenes Lochblech (10) ausgebildet ist, dessen Löcher (13) entweder axial oder radial vor dem Sensor (7) liegen.

7. Fahrzeugradachse nach einem der Ansprüche 1 bis 6, dadurch gekennzeichnet, daß an der Radkappe (9) ein Kilometerzähler (15) angeordnet ist.

FIG.1

FIG. 2